# EUROPEAN PATENT APPLICATION

(11) **EP 1 652 735 A1**
(43) Date of publication of application: **03.05.2006**
(21) Application number: 05077410.8
(22) Date of filing: 20.10.2005
(51) Int. Cl.: B60R 21/015

(54) **Apparatus for detecting a usage condition of a vehicle seat lap/shoulder belt**

(30) Priority: 29.10.2004 US 976510
(71) Applicant: Delphi Technologies, Inc., Troy, MI 48007 (US)
(72) Inventor: Gray, Charles A., Noblesville, IN 46060 (US); Ginter, Mark A., Russiaville, IN 46979 (US); Jefferson, Aaron M., El Paso, TX 79912 (US)
(74) Representative: Denton, Michael John

(57) **Abstract**

The usage condition of a vehicle seat lap/shoulder belt (18) is determined by detecting the proximity of the belt to at least one of the seat bight (34) and back cushion (16). A passive component (30, 36) is embedded or otherwise attached to at least one of the lap and shoulder portions (18a, 18b) of the belt (18), and at least one active component (32, 38) is disposed behind the trim fabric of the seat (10) to detect the proximity of the passive component (30, 36) to the seat. The proximity measurements are used in conjunction with other sensor data such as belt tension and/or state to reliably detect the presence of a rear facing infant seat and to discriminate between proper and improper lap/shoulder belt usage.

## Description

### TECHNICAL FIELD

The present invention relates to apparatus for characterizing the occupant of a vehicle seat, and more particularly to apparatus for detecting the usage condition of the seat's occupant restraint belt; i.e., its lap/shoulder belt.

### BACKGROUND OF THE INVENTION

A variety of sensor systems have been developed for characterizing the occupant of a motor vehicle seat to determine whether to enable or disable air bag deployment. For example, it is important to detect the presence of a rear-facing infant seat (RFIS), since nearly all vehicle manufacturers require frontal air bag suppression in the case of a RFIS due to the proximity of the infant's head to the point of air bag deployment. It is also important to detect improper usages of the seat's lap/shoulder belt, such as when the belt is buckled but fully or partially positioned between the seat and a normally seated occupant, since the air bag deployment force can be reduced if the occupant is unrestrained or only partially restrained. Known sensor systems include seated weight sensors, belt buckle sensors, belt tension sensors, and sensors for measuring the proximity or presence of the occupant relative to the point of air bag deployment or the seat back or the passenger compartment ceiling. See, for example, Fu 6,024,378, Stanley 6,220,627, Patterson et al. 6,605,877 and Basir et al. 6,678,600. However, these systems cannot adequately detect the presence of a RFIS or improper lap/shoulder belt usage.

### SUMMARY OF THE INVENTION

The present invention is directed to an improved apparatus for reliably and cost-effectively detecting the usage condition of a vehicle seat lap/shoulder belt for purposes of characterizing an occupant of the seat. A passive component, and preferably a magnetic strip, is embedded or otherwise attached to at least one of the lap and shoulder portions of the belt, and at least one active component disposed behind the trim fabric of the seat detects proximity of the passive component to the seat. In a preferred embodiment, passive components are placed in the lap and shoulder portions of the belt, and active components are placed in the seat's bight and back regions. The proximity measurements can be used in conjunction with other sensor data such as belt tension and/or state to reliably detect the presence of a RFIS and to discriminate between proper and improper lap/shoulder belt usage.

### BRIEF DESCRIPTION OF THE DRAWINGS

FIG. 1 is a diagram of a vehicle seat with a lap/shoulder belt, a passive occupant detection system electronic control unit (PODS ECU) and a lap/shoulder belt detection apparatus according to this invention; and
FIG. 2 is a flow diagram representing a software routine executed by the PODS ECU of FIG. 1.

### DESCRIPTION OF THE PREFERRED EMBODIMENT

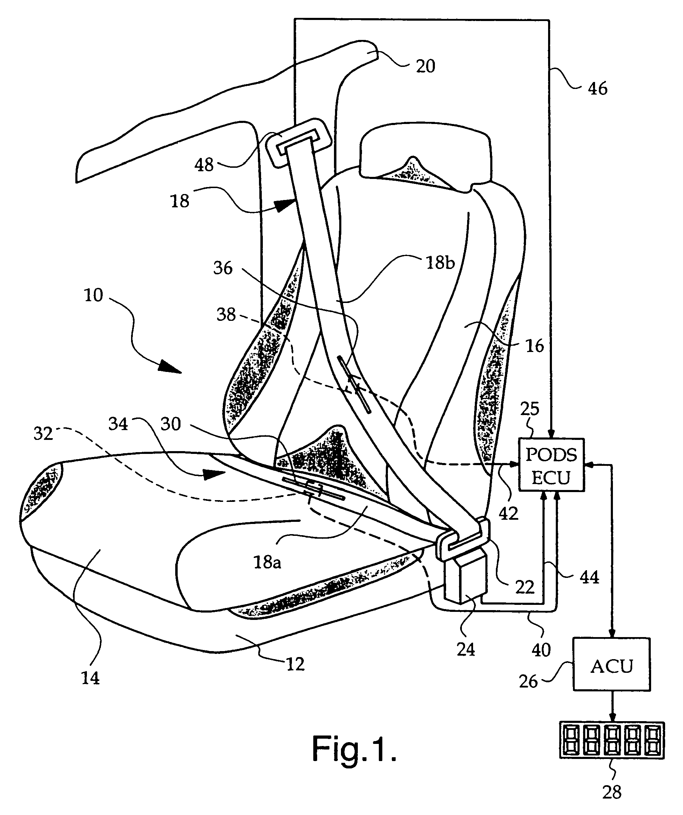

Referring to FIG. 1, the vehicle seat 10 is supported on a frame 12, and includes foam cushions 14 and 16 on the seat bottom and back. The seat 10 is equipped with a conventional lap/shoulder belt 18 anchored to the vehicle floor (not shown) and B-pillar 20. In use, the belt 18 is drawn around an occupant or through the frame of a child or infant seat, and a clip 22 slidably mounted on the belt 18 is inserted into the buckle 24 to fasten the belt 18 in place. A retractor assembly (not shown) mounted in the B-pillar 20 maintains a desired tension on the belt 18, and locks the belt 18 in place when the vehicle experiences significant deceleration. In FIG. 1, the lap portion of the belt 18 (i.e., the portion between the clip 22 and the floor anchor) is designated by the reference numeral 18a, and the shoulder portion of the belt 18 (i.e., the portion between the clip 22 and the B-Pillar 20) is designated by the reference numeral 18b.

A passive occupant detection system electronic control unit (PODS ECU) 25 analyzes various sensor data to detect and characterize an occupant of seat 10. The PODS ECU 25 is coupled to an airbag control unit (ACU) 26, which operates to deploy one or more airbags or other restraint devices (not shown) for occupant protection based on acceleration data and occupant characterization data obtained from PODS ECU 25. For example, ACU 26 can be programmed to deploy the restraints in the event of a severe crash, unless the PODS ECU 25 indicates that a RFIS is present. And even if a normally seated occupant is present, ACU 26 can deploy the restraints with reduced force and/or supply an occupant warning via display device 28 if the PODS ECU 25 indicates that the occupant is unrestrained or improperly belted. Other deployment control strategies are also possible.

Of course, the occupant characterization performed by PODS ECU 25 can only be as good as the sensor data permits, and the present invention is directed to a belt proximity sensor apparatus that considerably enhances occupant characterization. In general, the proximity sensor apparatus includes a passive electrical or magnetic component that is embedded or otherwise attached to at least one of the lap and shoulder portions 18a, 18b of the belt 18, and at least one active proximity sensing component disposed behind the trim fabric of the seat 10. In the illustrated embodiment, proximity sensors are provided for both the lap and shoulder portions 18a, 18b of the belt 18, and in each case, the passive component is a permanent magnetic strip and the active component is a Hall Effect sensor. Referring to FIG. 1, the magnetic strip 30 is embedded or otherwise attached to the lap portion 18a and the corresponding Hall Effect sensor 32 is disposed in the seat bottom or back cushion 14, 16 in the central portion of the seat bight 34 (i.e., the portion of the seat 10 where the bottom cushion 14 and back cushion 16 meet). The magnetic strip 36 is embedded or otherwise attached to the shoulder portion 18b, and the corresponding Hall Effect sensor 38 is disposed in the seat back cushion 16. The magnetic strips 30 and 36 may be constituted by separate strips as shown, or a single continuous magnetic strip if desired. The strips 30, 36 may be sewn into the belt 18, secured with an adhesive, etc., and the Hall Effect sensors 32, 38 may be secured to the foam of back cushion 16 or the trim fabric covering the foam.

When the lap portion 18a of belt 18 is in proximity to the bight region 34 as shown in FIG. 1, the magnetic strip 30 is magnetically coupled with the Hall Effect sensor 32, and an electrical signal (POS1) produced by sensor 32 on line 40 indicates that the belt 18 is near the bight region 34. When the belt 18 is in normal use (i.e., un-buckled, or buckled with the lap portion passing over the hips of a seated occupant), there is little or no magnetic coupling between the magnetic strip 30 and the Hall Effect sensor 32, and the POS 1 signal indicates that the belt 18 is disposed away from the bight region 34. Similarly, when the shoulder portion 18b of belt 18 is in proximity to the back cushion 16 as shown in FIG. 1, the magnetic strip 36 is magnetically coupled with the Hall Effect sensor 38, and an electrical signal (POS2) produced by sensor 38 on line 42 indicates that the belt 18 is close to the back cushion 16. When the belt 18 is in normal use (i.e., un-buckled, or buckled with the shoulder portion passing over the chest of a seated occupant), there is little or no magnetic coupling between the magnetic strip 36 and the Hall Effect sensor 38, and the POS2 signal indicates that the belt 18 is disposed away from the back cushion 16.

Significantly, the portions of belt 18 containing the magnetic strips 30 and 36 will be in proximity to the first and second sensors 32 and 38 when the seat 10 is occupied by a RFIS, much the same as when the belt 18 is buckled with an empty seat. Conversely, no part of the seat belt 18 will be in proximity to the sensors 32 or 38 when the belt 18 is used to properly secure a normally seated person or a forward-facing infant seat. As to improper usage of the belt 18, only the sensor 36 will indicate belt proximity when a normally seated occupant is just using the lap portion 18a of the belt 18; and only the sensor 30 will indicate belt proximity when a normally seated occupant is just using the shoulder portion 18b of the belt 18.

In the illustrated embodiment, the sensor data provided to PODS ECU 25 additionally includes a STATE signal on line 44 that indicates whether the belt 18 is buckled or un-buckled, and a TENSION signal on line 46 that indicates the belt tension. The STATE signal is developed by a switch (not shown) within buckle 24 that closes or opens on insertion of the clip 22 into the buckle 24. The TENSION signal is developed by a belt tension sensor 48 that may be located in the B-pillar 20 as shown, near the floor on the outboard side of seat 10, or in any other convenient location. The tension sensor 48 may be constructed as disclosed, for example, in the aforementioned U.S. Patent No. 6,605,877 to Patterson et al., incorporated herein by reference.

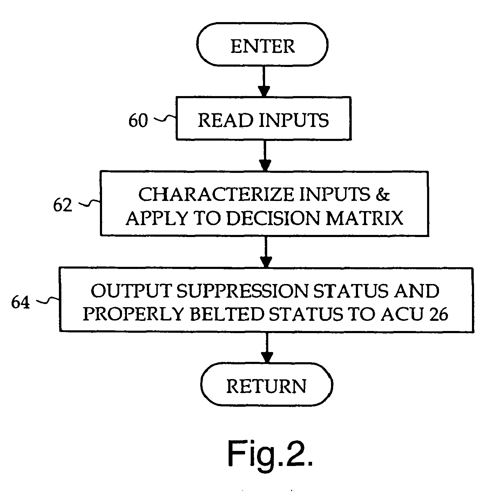

In general, the PODS ECU 25 characterizes the inputs on lines 40, 42, 44 and 46, and applies them to a decision matrix to perform occupant characterization. The flow diagram of FIG. 2 represents a software routine that is periodically executed by the PODS ECU 25 for this purpose. The block 60 reads the aforementioned input signals, whereafter the block 62 characterizes the analog inputs (TENSION, POS 1 and POS2) by comparing them to various predefined thresholds, and applies the inputs to the decision matrix. For example, TENSION may be characterized as either HIGH (above a tension threshold) or LOW (below the tension threshold), and the belt proximity signals POS1, POS2 may be characterized as either NEAR (above a proximity threshold) or FAR (below a proximity threshold). In any event, PODS ECU 25 outputs the occupant characterization to ACU 26, which enables or disables air bag deployment as discussed above, and visually communicates the occupant status and any driver or passenger warnings via display 28.

In summary, the present invention provides a simple and cost-effective apparatus that significantly enhances the ability of a system to accurately characterize a vehicle seat occupant by detecting the usage condition of the seat's lap/shoulder belt 18. While the apparatus has been described with respect to the illustrated embodiment, it is recognized that numerous modifications and variations in addition to those mentioned above will occur to those skilled in the art. For example, another type of proximity sensor such as a radio frequency transponder or an electric field sensor may be used instead of the illustrated magnetic sensor elements. Also, certain systems may require only one proximity sensor, the number and kind of other sensors used in conjunction with the proximity sensor(s) may vary considerably, and so on. Accordingly, it is intended that the invention not be limited to the disclosed embodiment, but that it have the full scope permitted by the language of the following claims.

## Claims

1. Apparatus for detecting a usage condition of an occupant restraint belt (18) of a vehicle seat (10), comprising:
a passive component (30, 36) attached to said occupant restraint belt (18); and
an active proximity sensing component (32, 38) disposed in said vehicle seat (10) for detecting a proximity of said passive component (30, 36) to provide an indication of proximity of said occupant restraint belt (18) to said vehicle seat (10).

2. The apparatus of claim 1, wherein said passive component (30) is attached to a lap portion (18a) of said occupant restraint belt (18), and said active proximity sensing component (32) is disposed in a bight portion (34) of said seat (10).

3. The apparatus of Claim 1, wherein said passive component (36) is attached to a shoulder portion (18b) of said occupant restraint belt (18), and said active proximity sensing component (38) is disposed in a back cushion (16) of said seat (10).

4. The apparatus of claim 1, where the passive component (30, 36) is a strip of permanent magnet material, and said active proximity sensing component (32, 38) is at least one Hall Effect sensor.

5. The apparatus of claim 4, further comprising:
a first Hall Effect sensor (32) disposed in a bight portion (34) of said seat (10); and
a second Hall Effect sensor (38) disposed in a back cushion (16) of said seat (10).

6. The apparatus of claim 4, comprising:
a first strip of permanent magnet material (30) attached to a lap portion (18a) of said occupant restraint belt (18);
a first Hall Effect sensor (32) disposed in a bight portion (34) of said seat (10) for detecting a proximity of said first strip of permanent magnet material (30) to provide an indication of proximity of said lap portion (18a) to said seat (10);
a second strip of permanent magnet material (36) attached to a shoulder portion (18b) of said occupant restraint belt (18); and
a second Hall Effect sensor (38) disposed in a back cushion (16) of said seat (10) for detecting a proximity of said second strip of permanent magnet material (36) to provide an indication of proximity of said shoulder portion (18b) to said seat (10).
